# EUROPEAN PATENT APPLICATION

(11) **EP 4 830 896 A1**
(43) Date of publication of application: **28.10.2026**
(21) Application number: 24906878.4
(22) Date of filing: 10.10.2024
(51) Int. Cl.: B29C 49/78

(54) **MOLDING CONDITION ADJUSTMENT METHOD AND MOLDING CONDITION ADJUSTMENT DEVICE**

(30) Priority: 18.12.2023 JP 2023213141
(71) Applicant: Toyo Seikan Co., Ltd., Tokyo 141-8640 (JP)
(72) Inventor: WATANABE, Taiki, Yokohama-shi, Kanagawa 230-0001 (JP); ISOGAWA, Ken, Yokohama-shi, Kanagawa 230-0001 (JP); UEKI, Norio, Yokohama-shi, Kanagawa 230-0001 (JP)
(74) Representative: Detken, Andreas
(86) International application number: PCT/JP2024/036221
(87) International publication number: WO 2025/134490

(57) **Abstract**

[Problem] To provide a molding condition adjustment method capable of appropriately adjusting molding conditions in blow molding. [Means for Resolution] A molding condition adjustment method by a molding condition adjustment device 3 adjusts molding conditions under which a molding product manufacturing device operating in accordance with a plurality of device setting values manufactures a molding product having a hollow center by blow-molding a molding object. The molding condition adjustment method includes a plurality of adjustment steps S20 to S50 of adjusting a plurality of adjustment items related to the molding object and the molding product in accordance with an adjustment order determined in advance for the plurality of adjustment items. Each of the plurality of adjustment steps S20 to S50 adjusts an adjustment item by setting a device setting value related to the adjustment item by at least one setting method among the plurality of setting methods.

## Description

### Technical Field

The present invention relates to a molding condition adjustment method and a molding condition adjustment device.

### Background Art

In the related art, a molding product manufacturing device has been used as a device for manufacturing a hollow molding product (a bottle or the like) by blow-molding a molding object (a preform, a parison, or the like). The molding product manufacturing device is a device that manufactures a molding product from a molding object by performing, for example, a heating process, a stretching process, and a blow molding process on the molding object (for example, see Patent Document 1)

### Citation List

### Patent Document

Patent Document 1: JP 2007-045119 A

### Summary of Invention

### Technical Problem

The shape and quality of a molding product manufactured through each process such as a heating process, a stretching process, and a blow molding process performed on a molding object are affected by various molding conditions such as temperature, pressure, and time in each process. Therefore, in order to obtain the target shape and quality of the molding product for a plurality of adjustment items, a condition setting operation of adjusting the molding conditions of each step is required before the manufacturing of the molding product. However, since there are various combinations of the molding conditions, the operation greatly depends on the experience and intuition of a skilled person, and is very difficult.

The present invention has been made to solve the above-described problem, and an object thereof is to provide a molding condition adjustment method and a molding condition adjustment device that can appropriately adjust molding conditions in blow molding.

### Solution to Problem

In order to achieve the above object, a molding condition adjustment method according to an aspect of the present invention is a molding condition adjustment method using a computer to adjust molding conditions under which a molding product manufacturing device operating in accordance with a plurality of device setting values manufactures a molding product having a hollow center by blow-molding a molding object. The molding condition adjustment method includes a plurality of adjustment steps of adjusting a plurality of adjustment items related to the molding object and the molding product in accordance with an adjustment order determined in advance for the plurality of adjustment items. Each of the plurality of adjustment steps adjusts an adjustment item among the plurality of adjustment items by setting a device setting value among the plurality of device setting values related to the adjustment items in accordance with at least one setting method among a plurality of setting methods.

### Advantageous Effects of Invention

According to the molding condition adjustment method and the molding condition adjustment device according to the present invention, when each of the plurality of adjustment steps adjusts the plurality of adjustment items in accordance with the predetermined adjustment order, an adjustment item among the adjustment items is adjusted by setting a device setting value related to the adjustment item among the device setting values by at least one setting method among the plurality of setting methods. Therefore, the molding conditions in the blow molding can be appropriately adjusted.

### Brief Description of Drawings

FIG. 1 is a schematic diagram illustrating an example of a bottle manufacturing management system 1.
FIG. 2 is a schematic front view illustrating an example of a preform heating device 20d.
FIG. 3 is a block diagram illustrating an example of the preform heating device 20d.
FIG. 4 is a schematic plan view illustrating an example of a blow molding device 20f.
FIG. 5 is a schematic configuration diagram illustrating an example of a molding unit 25.
FIG. 6 is a block diagram illustrating an example of the blow molding device 20f.
FIG. 7 is a flowchart illustrating a flow of a bottle manufacturing process.
FIG. 8 is a data configuration diagram illustrating an example of a database 310.
FIG. 9 is a block diagram illustrating an example of a molding condition adjustment device 3.
FIG. 10 is a hardware configuration diagram illustrating an example of a computer 900 constituting each device.
FIG. 11 is a flowchart illustrating an example of a molding condition adjustment method by the molding condition adjustment device 3.
FIG. 12 is a flowchart illustrating details of an adjustment step (step S20) of adjusting the temperature of a preform 10.
FIG. 13 is a flowchart illustrating details of an adjustment step (step S30) of adjusting the mass distribution of a bottle 11.
FIG. 14 is a flowchart illustrating details of an adjustment step (step S40) of adjusting the height of the bottle 11.
FIG. 15 is a flowchart illustrating details of an adjustment step (step S50) of adjusting the internal volume of the bottle 11.

### Description of Embodiments

Embodiments for implementing the present invention will be described below with reference to the accompanying drawings. In the following, a scope necessary for description for achieving the object of the present invention will be schematically described, and a scope necessary for description of the relevant parts of the present invention will be mainly described, whereas parts whose description is omitted are based on a known technique.

### Configuration of Bottle Manufacturing Management System 1

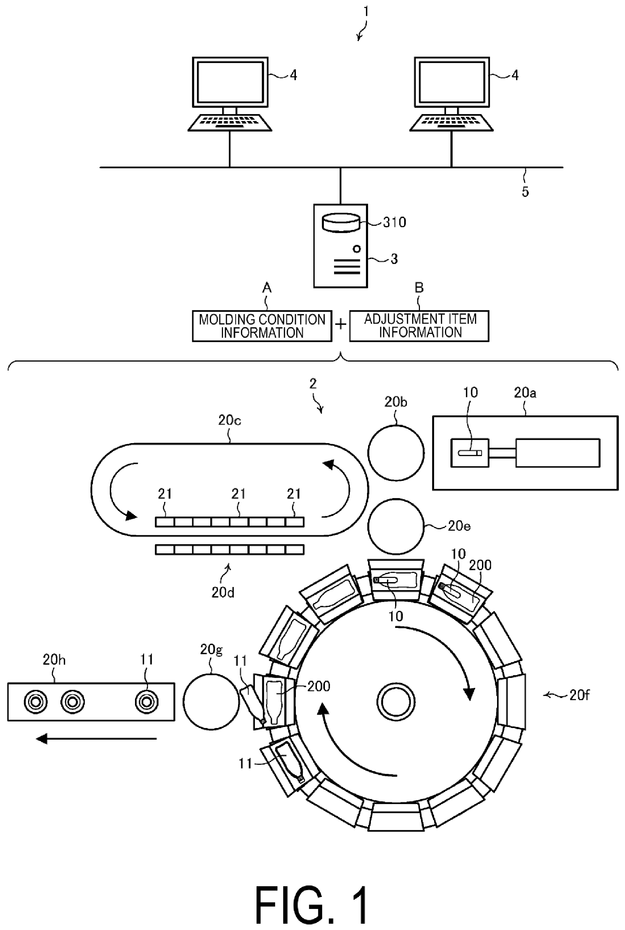

FIG. 1 is a schematic diagram illustrating an example of a bottle manufacturing management system 1. The bottle manufacturing management system 1 functions as a system that manufactures a hollow molding product by blow-molding a molding object. The bottle manufacturing management system 1 is a system that manages various types of information related to a molding object, a molding product, molding conditions, and the like.

In the present embodiment, a case where a bottle 11 (e.g., a PET bottle) having a hollow center, which is one form of a molding product, is manufactured from a preform 10, which is one form of a molding object, by a biaxial stretch blow molding method will be described. The molding product is not limited to the bottle 11, and may have any shape as long as the molding product is blow-molded from a molding object.

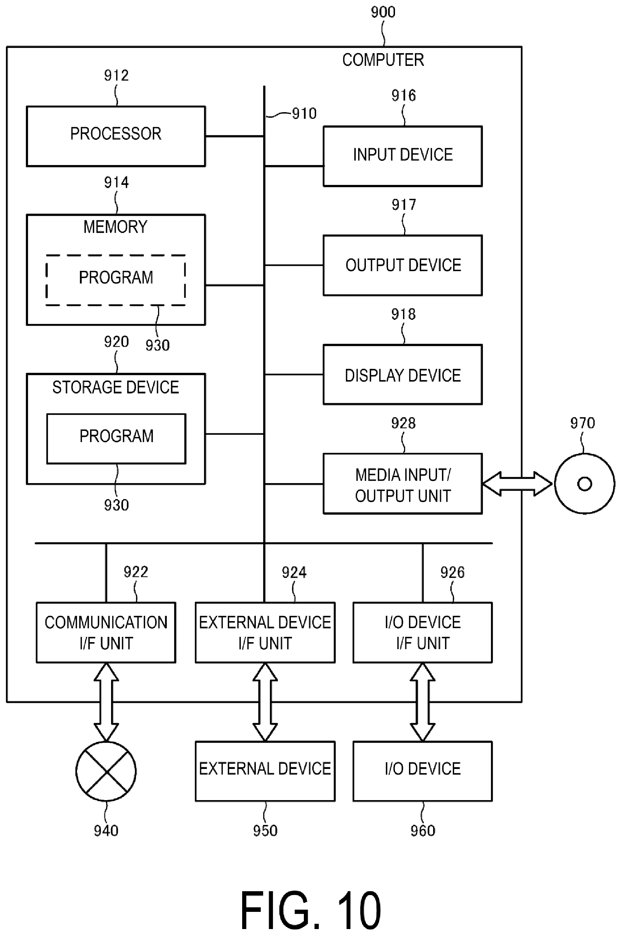

As illustrated in FIG. 1, the bottle manufacturing management system 1 includes, as main components thereof, a bottle manufacturing device 2, a molding condition adjustment device 3, and a user terminal device 4. Each of the devices 2 to 4 is constituted by a general-purpose or dedicated computer (see FIG. 10 to be described below), and is connected to a wired or wireless network 5 so as to be able to mutually transmit and receive various data, for example. Note that the number of each of the devices 2 to 4 and the connection configuration to the network 5 are not limited to the example illustrated in FIG. 1, and may be changed as appropriate.

The bottle manufacturing device 2 is a device that blow-molds the preform 10 into the bottle 11 by using a mold 200 and operating in accordance with adjusted molding conditions. The molding conditions include various device setting values in accordance with which each part provided to the bottle manufacturing device 2 operates.

The bottle manufacturing device 2 includes: an injection molding device 20a that injection-molds the preform 10 from a synthetic resin as a raw material; a preform ejection device 20b that takes out the preform 10 from the injection molding device 20a and transfers the preform 10 to a preform conveyor 20c; the preform conveyor 20c that conveys the preforms 10; a preform heating device 20d that is provided in the middle of the preform conveyor 20c and heats the preform 10; a preform feeding device 20e that receives the preform 10 from the preform conveyor 20c and feeds the preform 10 to a blow molding device 20f; a blow molding device 20f that molds the preform 10 that has been heated into the bottle 11; a molding product ejection device 20g that takes out the bottle 11 from the blow molding device 20f and transfers the bottle 11 to a molding product conveyor 20h; and the molding product conveyor 20h that conveys the bottle 11 that has been molded. Note that the configuration of the bottle manufacturing device 2 is not limited to the example of FIG. 1, and may be changed as appropriate.

The molding condition adjustment device 3 is a device that adjusts molding conditions (specifically, various device setting values) for a plurality of adjustment items related to the preform 10 and the bottle 11 in cooperation with the bottle manufacturing device 2 and the user terminal device 4.

The molding condition adjustment device 3 includes a database 310 capable of registering molding condition information A indicating a molding conditions and adjustment item information B indicating target values and adjustment results for a plurality of adjustment items in association with each other. The molding condition information A and the adjustment item information B registered in the database 310 are referred to by the bottle manufacturing device 2 and the user terminal device 4 and used for manufacturing the bottle 11.

The user terminal device 4 is a device used by a user such as a manufacturing manager of the bottle 11. The user terminal device 4 is installed with programs such as an application program and a web browser, receives various input operations, and outputs various types of information via a display screen or a voice. The user terminal device 4 is used when the user inputs an instruction or the like to the molding condition adjustment device 3, outputs a processing result of the molding condition adjustment device 3, or edits the database 310.

### Preform Heating Device 20d

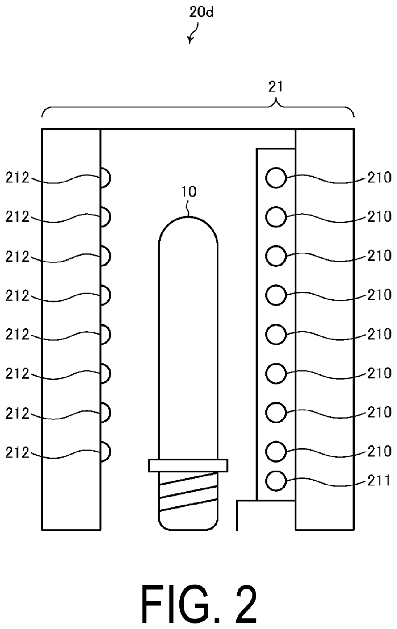

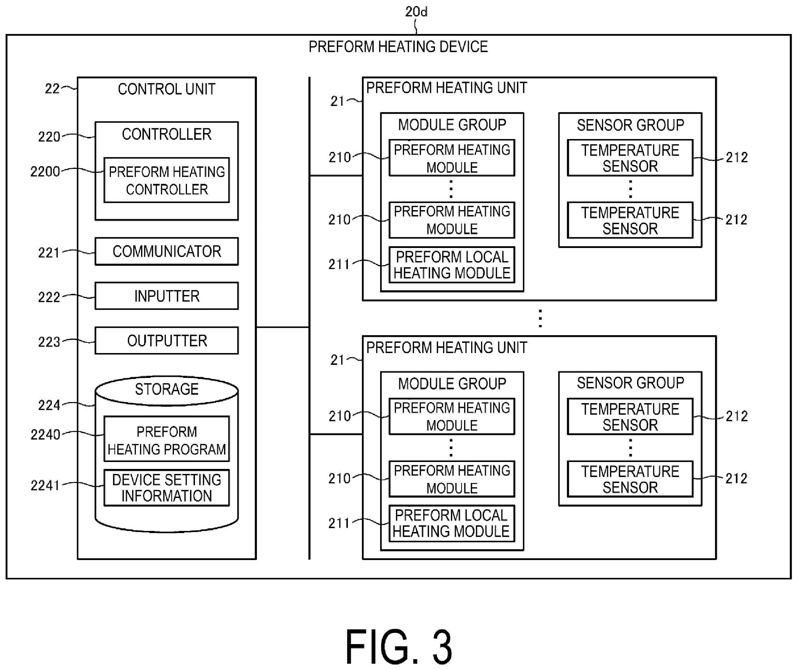

FIG. 2 is a schematic front view illustrating an example of the preform heating device 20d. FIG. 3 is a block diagram illustrating an example of the preform heating device 20d. The preform heating device 20d performs a preform heating process of heating the preform 10 sequentially conveyed by the preform conveyor 20c. The preform 10 is held in an upright state by, for example, a rotatable mandrel (not illustrated), and is conveyed at a predetermined conveying speed by the preform conveyor 20c.

The preform heating device 20d includes, as main components thereof, a plurality of preform heating units 21 that heat the preform 10, and a control unit 22 that controls each part of the preform heating device 20d. As illustrated in FIG. 1, the plurality of preform heating units 21 are arranged at predetermined intervals along the conveying direction of the preform 10 by the preform conveyor 20c.

Each of the plurality of preform heating units 21 includes a plurality of preform heating modules 210 that heat respective portions of the preform 10, a preform local heating module 211 that locally heats a portion of the preform 10, and a temperature sensor 212. The plurality of preform heating modules 210 are arranged at predetermined intervals in the vertical direction, and each of them is constituted by an infrared heater or the like. The preform local heating module 211 is disposed at a position where a neck portion of the preform 10 can be locally heated, and is constituted by an infrared heater or the like. In this case, the preform local heating module 211 may also serve as the preform heating module 210. The number and arrangement of the preform heating modules 210, the preform local heating module 211, and the temperature sensors are not limited to the example of FIG. 2, and may be changed as appropriate. The preform heating unit 21 may further include a heating module disposed inside the preform 10 to heat the inside of the preform 10. The preform heating unit 21 may further include a blower module that supplies blowing air at a predetermined temperature to the preform 10.

The control unit 22 is electrically connected to a module group and a sensor group provided to the plurality of preform heating units 21, and functions as a controller that comprehensively controls the plurality of preform heating units 21. Note that, FIG. 3 illustrates the preform heating modules 210 and the preform local heating modules 211 as parts of the module group and the temperature sensors 212 as parts of the sensor group, and the illustrations of the other module groups and sensor groups are omitted.

The control unit 22 is constituted by a general-purpose or dedicated computer (see FIG. 10 to be described below). The control unit 22 includes, as main components thereof, a controller 220, a communicator 221, an inputter 222, an outputter 223, and a storage 224.

The storage 224 stores various programs (an operating system (OS), a preform heating program 2240, and the like) and data (device setting information 2241 and the like) used in the operation of the preform heating device 20d. The device setting information 2241 is information in which various device setting values in accordance with which the preform heating device 20d performs the preform heating process can be registered, and is configured to be editable by a device user via a display screen (setting interface), for example.

The controller 220 is constituted by, for example, an arithmetic processing device (a processor such as a CPU, an MPU, or a GPU) or a sequencer. The controller 220 functions as a preform heating controller 2200 by executing, for example, the preform heating program 2240 stored in the storage 224.

The preform heating controller 2200 operates the module group provided to each of the preform heating units 21. At this time, the preform heating controller 2200 heats each portion of the preform 10 by operating each of the preform heating modules 210 in accordance with the device setting values registered in the device setting information 2241.

The communicator 221 is connected to a communication network, and functions as a communication interface that transmits and receives various data to and from not only the molding condition adjustment device 3 and the user terminal device 4, but also a terminal device (not illustrated) used by the device user or the like of the preform heating device 20d, and a manufacturing management device (not illustrated) that performs manufacturing management of the bottle manufacturing management system 1. The inputter 222 receives various input operations by the user of the preform heating device 20d, and the outputter 223 outputs various types of information to the device user through display of a screen, lighting of a signal tower, and sounding of a buzzer, thereby each functioning as a user interface.

### Blow Molding Device 20f

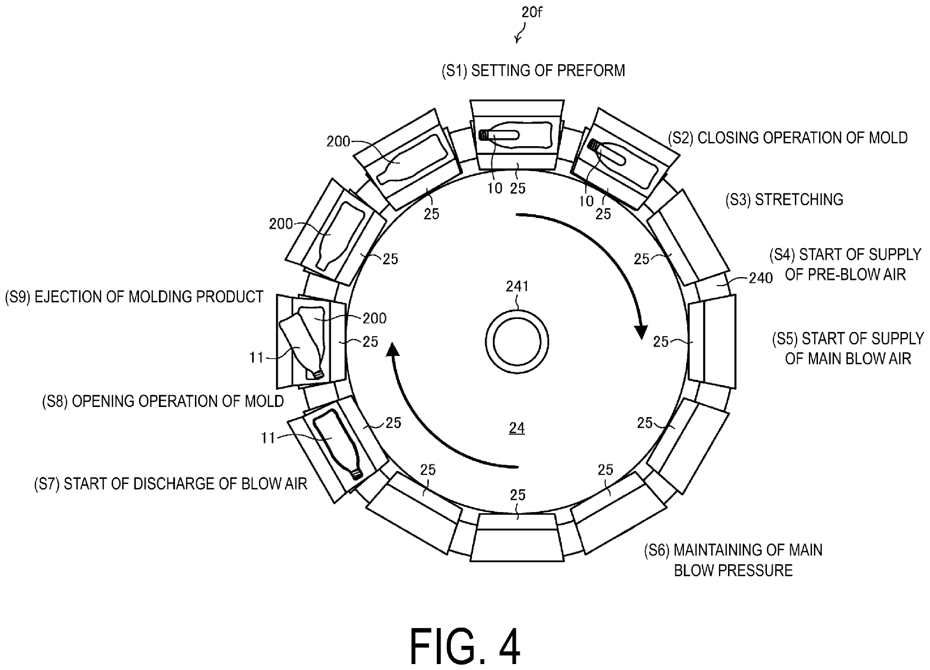

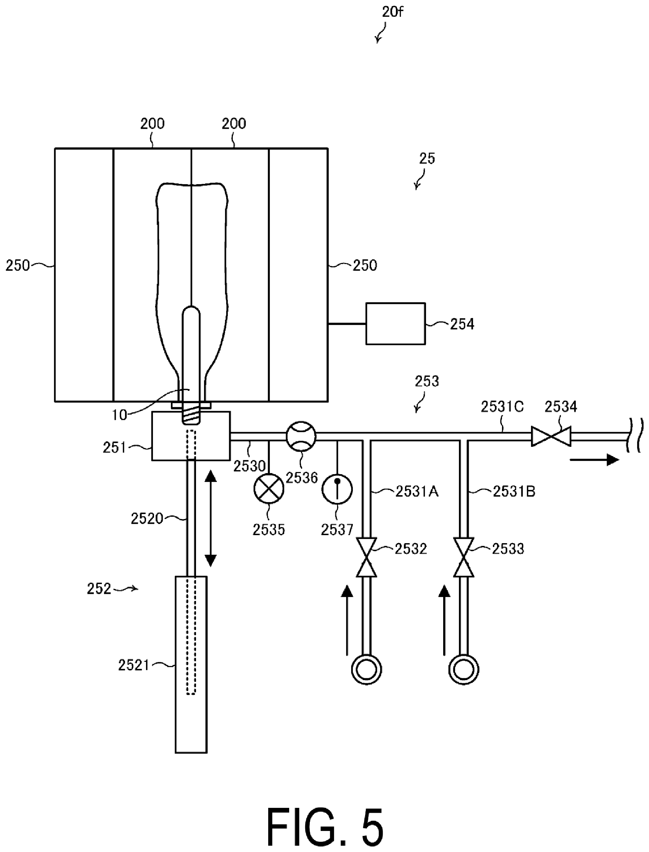

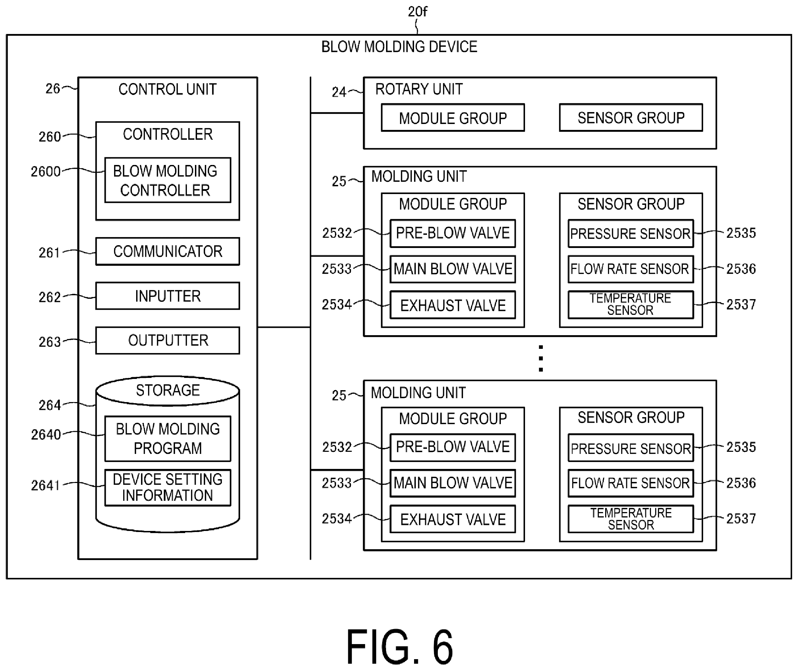

FIG. 4 is a schematic plan view illustrating an example of the blow molding device 20f. FIG. 5 is a schematic configuration diagram illustrating an example of a molding unit 25. FIG. 6 is a block diagram illustrating an example of the blow molding device 20f. The blow molding device 20f is a device that uses a plurality of (twelve in the present embodiment) molds 200, supplies a blow fluid into the preforms 10 sandwiched by the molds 200, and repeatedly performs a blow molding process of blow-molding the preforms 10 into the bottles 11 having a hollow center for each of the molds 200. In the present embodiment, the blow fluid is described as air, but may be any gas other than air, or may be a liquid.

The blow molding device 20f includes, as main components thereof, a rotary unit 24, a plurality of (twelve in the present embodiment) molding units 25 disposed at predetermined intervals on a circumferential track of the rotary unit 24, and a control unit 26 that controls each part of the blow molding device 20f.

The rotary unit 24 includes, for example, a rotary support portion 240 that is formed in a disk shape and supports the plurality of molding units 25, and a rotation mechanism portion 241 that rotates the rotary support portion 240 at a predetermined rotation speed (rotation cycle).

Each of the plurality of molding units 25 includes: a mold support unit 250 that supports the mold 200 in an openable and closable manner; a holding unit 251 that holds the preform 10 sandwiched by the mold 200 in a sealed state; a stretching unit 252 that stretches the preform 10 supported by the holding unit 251; a blowing unit 253 that supplies or discharges the blow fluid (air) to or from the preform 10 supported by the holding unit 251; and a mold heating unit 254 that heats the mold 200.

The stretching unit 252 includes a stretch rod 2520 to be inserted into the preform 10, and a stretch rod support mechanism portion 2521 that supports the stretch rod 2520 so as to be movable forward and backward.

The blowing unit 253 includes: a main pipe 2530 connected to the stretch rod 2520 via the holding unit 251; three branch pipes 2531A to 2531C branched from the main pipe 2530; a pre-blow valve 2532 provided to the branch pipe 2531A connected to a low-pressure pre-blow air source; a main blow valve 2533 provided to the branch pipe 2531B connected to a highpressure main blow air supply source; an exhaust valve 2534 provided to the branch pipe 2531C connected to an air discharge system; and a pressure sensor 2535, a flow rate sensor 2536, and a temperature sensor 2537 provided to the main pipe 2530 or the holding unit 251. The pressure sensor 2535, the flow rate sensor 2536, and the temperature sensor 2537 function as measurement units capable of measuring the pressure, the flow rate, and the temperature of the blow fluid (pre-blow air, main blow air, and blow air exhaust) supplied into the preform 10 at predetermined measurement time intervals, respectively, and output measurement values at each time point as measurement results.

Although specific configurations of the rotation mechanism portion 241, the mold support unit 250, the holding unit 251, and the stretching unit 252 are omitted in FIGS. 4 and 5, they are constituted by appropriately combining, for example, a module for generating a driving force such as a servo motor or a cylinder, a driving force transmission mechanism such as a linear guide, a ball screw, a gear, a cam, a belt, a coupling, or a bearing, and a sensor such as a linear sensor, an encoder sensor, or a limit sensor. Although a specific configuration of the mold heating unit 254 is omitted in FIGS. 4 and 5, it is constituted by appropriately combining, for example, a module such as an electric heater and a sensor such as a temperature sensor.

The control unit 26 is electrically connected to a module group and a sensor group provided to the rotary unit 24 and the plurality of molding unit 25, and functions as a controller that comprehensively controls the rotary unit 24 and the plurality of molding units 25. Note that, FIG. 6 illustrates the pre-blow valve 2532, the main blow valve 2533, and the exhaust valve 2534 as parts of the module group, and the pressure sensor 2535, the flow rate sensor 2536, and the temperature sensor 2537 as parts of the sensor group, and the illustrations of the other module groups and sensor groups are not illustrated.

The control unit 26 is constituted by a general-purpose or dedicated computer (see FIG. 10 to be described below). The control unit 26 includes, as main components thereof, a controller 260, a communicator 261, an inputter 262, an outputter 263, and a storage 264.

The storage 264 stores various programs (an operating system (OS), a blow molding program 2640, and the like) and data (device setting information 2641 and the like) used in the operation of the blow molding device 20f. The device setting information 2641 is information in which various device setting values in accordance with which the blow molding device 20f performs the blow molding process can be registered, and is configured to be editable by a device user via a display screen (setting interface), for example.

The controller 260 is constituted by, for example, an arithmetic processing device (a processor such as a CPU, an MPU, or a GPU) or a sequencer. The controller 260 functions as a blow molding controller 2600 by executing the blow molding program 2640 stored in the storage 264, for example.

The blow molding controller 2600 operates the module group provided to the rotary unit 24 and the module group provided to each of the molding units 25. At this time, the blow molding controller 2600 operates the rotary unit 24 and each of the molding units 25 in accordance with the device setting values registered in the device setting information 2641 to stretch the preform 10 and supply the blow fluid into the preform 10, thereby blow-molding the preform 10 into the bottle 11 having a hollow center.

The communicator 261 is connected to a communication network, and functions as a communication interface that transmits and receives various data to and from not only the molding condition adjustment device 3 and the user terminal device 4, but also a terminal device (not illustrated) used by a device user of the blow molding device 20f, and the manufacturing management device (not illustrated) that performs manufacturing management of the bottle manufacturing management system 1. The inputter 262 receives various input operations by a user of the blow molding device 20f, and the outputter 263 outputs various types of information to the device user through display of a screen, lighting of a signal tower, and sounding of a buzzer, thereby each functioning as a user interface.

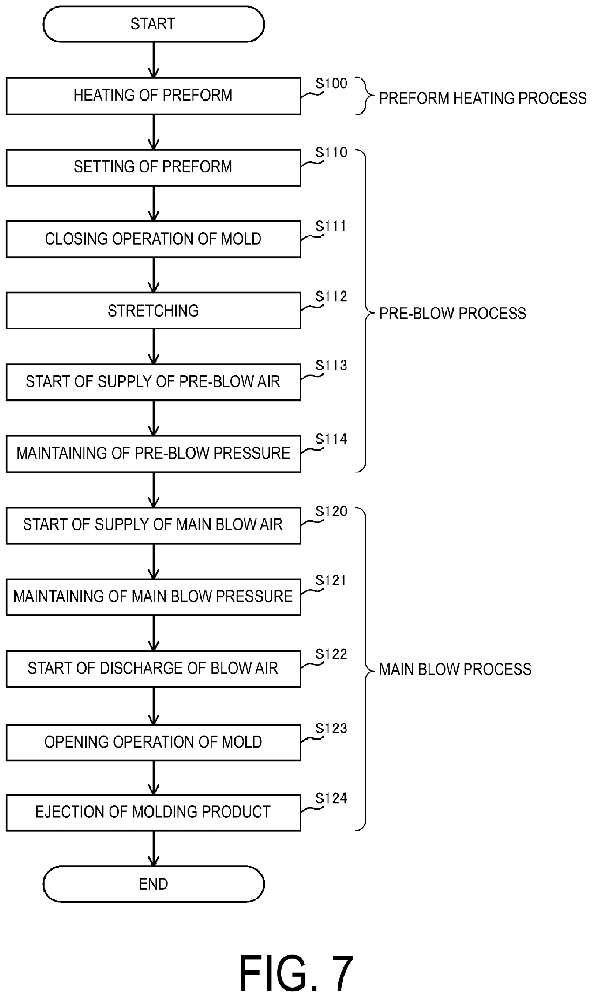

FIG. 7 is a flowchart illustrating a flow of a bottle manufacturing process. The bottle manufacturing process is a process of manufacturing the bottle 11 by heating the preform 10, setting the heated preform 10 to the mold 200, and blow-molding the set preform 10. The bottle manufacturing process includes a preform heating process (step S100), a pre-blow process (steps S110 to S114), and a main blow process (steps S120 to S124).

First, in step S100, the preform heating device 20d heats the preform 10 to a predetermined temperature by each of the preform heating modules 210 when the preform 10 conveyed by the preform conveyor 20c passes through a heating section by the preform heating device 20d. Then, the preform feeding device 20e feeds the heated preform 10 to the blow molding device 20f.

Next, in step S110, the blow molding device 20f holds the heated preform 10 with the holding unit 251. In step S111, the blow molding device 20f closes the mold 200 by the mold support unit 250. At this time, the mold 200 is heated to a predetermined temperature by the mold heating unit 254. In step S112, the blow molding device 20f stretches the preform 10 by moving forward the stretch rod 2520 along the central axis of the preform 10. In step S113, the blow molding device 20f opens the pre-blow valve 2532. In step S114, the blow molding device 20f maintains a pre-blow pressure at a target pressure by continuing the supply of pre-blow air for a pre-blow time while moving forward the stretch rod 2520.

Next, in step S120, the blow molding device 20f closes the pre-blow valve 2532 to stop the supply of the pre-blow air, and opens the main blow valve 2533 to increase a main blow pressure. In step S121, the blow molding device 20f maintains the main blow pressure at a target pressure by continuing the supply of main blow air for a main blow time. In step S122, the blow molding device 20f closes the main blow valve 2533 and opens the exhaust valve 2534 to discharge the blow fluid from the main pipe 2530 to the outside. In step S123, the blow molding device 20f opens the mold 200 by the mold support unit 250 while moving backward the stretch rod 2520 from the inside of the preform 10. In step S124, the blow molding device 20f releases the fixing of the bottle 11 by the holding unit 251. Then, the molding product ejection device 20g takes out the bottle 11 that has been blow-molded from the mold 200.

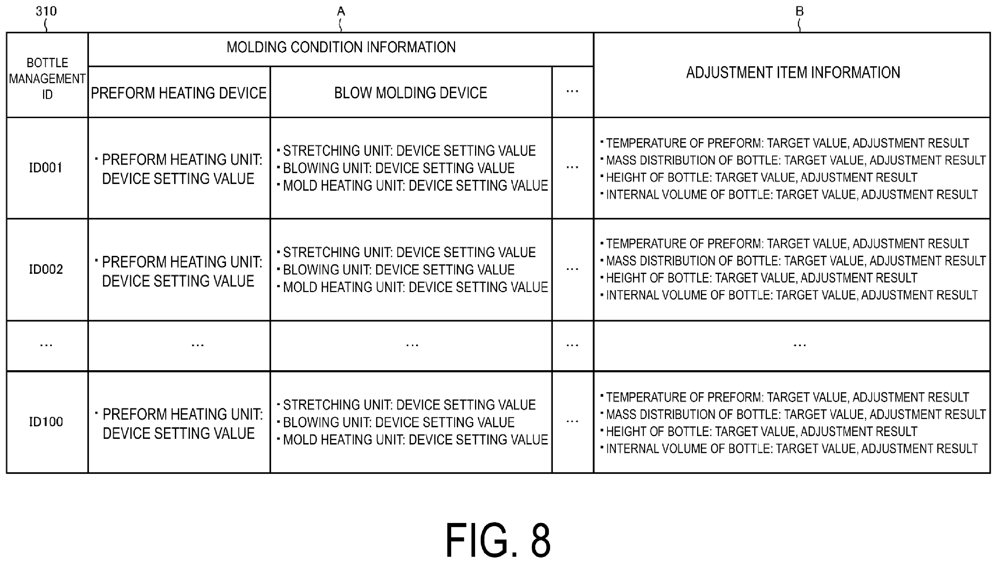

FIG. 8 is a data configuration diagram illustrating an example of a database 310. The database 310 has a plurality of records for each bottle management ID for associating various types of information handled in the bottle manufacturing management system 1 with each other. The bottle management ID is information (a product number, a model number, or the like) for identifying the bottle 11. Each record has, for example, fields in which a plurality of device setting values included in the molding condition information A and target values and measurement results for a plurality of adjustment items included in the adjustment item information B can be registered.

The molding condition information A and the adjustment item information B registered in the database 310 can be referred to from the molding condition adjustment device 3 and the user terminal device 4. Note that editing operations such as addition, deletion, correction of each data may be performed on the display screen of the user terminal device 4.

The molding condition information A is information indicating the molding conditions in the bottle manufacturing process illustrated in FIG. 7. The molding condition information A includes, for example, device setting values for the preform heating unit 21 provided to the preform heating device 20d, and device setting values for the stretching unit 252, the blowing unit 253, and the mold heating unit 254 provided to the blow molding device 20f.

The device setting values for the preform heating unit 21 include a device setting value for increasing or decreasing the heating amount of the plurality of preform heating modules 210 as a whole, a device setting value for increasing or decreasing the heating amount of each of the plurality of preform heating modules 210, a device setting value for individually increasing or decreasing the heating amount of the preform local heating module 211, a device setting value for increasing or decreasing the air volume or the air pressure of the blower module, and the like. The device setting values for the preform heating module 210 and the preform local heating module 211 are set by designating any one of heating levels having a plurality of stages. The device setting value for the blower module is set by designating any one of air volume levels having a plurality of stages or any one of air pressure levels having a plurality of stages.

The device setting values for the stretching unit 252 include device setting values for increasing or decreasing a stretching amount and a stretching speed by the stretch rod 2520, and the like. The device setting value for the stretching unit 252 is set by designating a numerical value corresponding to the stretching amount or the stretching speed.

The device setting values for the blowing unit 253 include device setting values for increasing or decreasing a pre-blow pressure, a pre-blow time, and a pre-blow flow rate, and device setting values for increasing or decreasing a main blow pressure, a main blow time, a main blow flow rate, and the like. The device setting value for the blowing unit 253 is set by designating a numerical value corresponding to the pre-blow pressure or the main blow pressure, designating a time corresponding to the pre-blow time or the main blow time, or designating a numerical value corresponding to the pre-blow flow rate or the main blow flow rate.

The device setting values for the mold heating unit 254 include a device setting value for increasing or decreasing a heating amount of the mold 200, and the like. The device setting value for the mold heating unit 254 is set by designating any one of heating levels having a plurality of stages.

The adjustment item information B is information indicating target values for a plurality of adjustment items related to the preform 10 and the bottle 11. The target values are values determined in a design stage or an inspection stage of the preform 10 and the bottle 11, and correspond to design values or standard values. The plurality of adjustment items include at least one of a temperature of the preform 10, a mass distribution of the bottle 11, a height of the bottle 11, or an internal volume of the bottle 11. Specifically, the plurality of adjustment items preferably include the temperature of the preform 10, the mass distribution of the bottle 11, and at least one of the height of the bottle 11 or the internal volume of the bottle 11. In the present embodiment, a case where the plurality of adjustment items are the temperature of the preform 10, the mass distribution of the bottle 11, the height of the bottle 11, and the internal volume of the bottle 11 will be described. The adjustment items may be any items as long as they are related to the shape and quality of the preform 10 and the bottle 11, and adjustment items other than the above may be used. In addition, the adjustment items may be different between product numbers, model numbers, or the like of the bottle 11.

The "temperature of the preform 10" as an adjustment item is, for example, the temperature of the preform 10 at a time point after the preform 10 is heated in step S100 and before the preform 10 is held by the holding unit 251 in step S110. The adjustment item information B includes a target value for the temperature of the preform 10 at that time and a measurement result of the temperature of the preform 10.

The "mass distribution of the bottle 11" as an adjustment item is, for example, the mass distribution of the bottle 11 at a time point after the bottle 11 is taken out from the mold 200 in S124. The adjustment item information B includes a target value for the mass distribution of the bottle 11 at that time and a measurement result of the mass distribution of the bottle 11.

The "height of the bottle 11" as an adjustment item is, for example, the height of the bottle 11 at a time point after the bottle 11 is taken out from the mold 200 in S124. The adjustment item information B includes a target value for the height of the bottle 11 at that time and a measurement result of the height of the bottle 11.

The "internal volume of the bottle 11" as an adjustment item is, for example, the internal volume of the bottle 11 at a time point after the bottle 11 is taken out from the mold 200 in S124. The adjustment item information B includes a target value for the internal volume of the bottle 11 at that time and a measurement result of the internal volume of the bottle 11.

### Molding Condition Adjustment Device 3

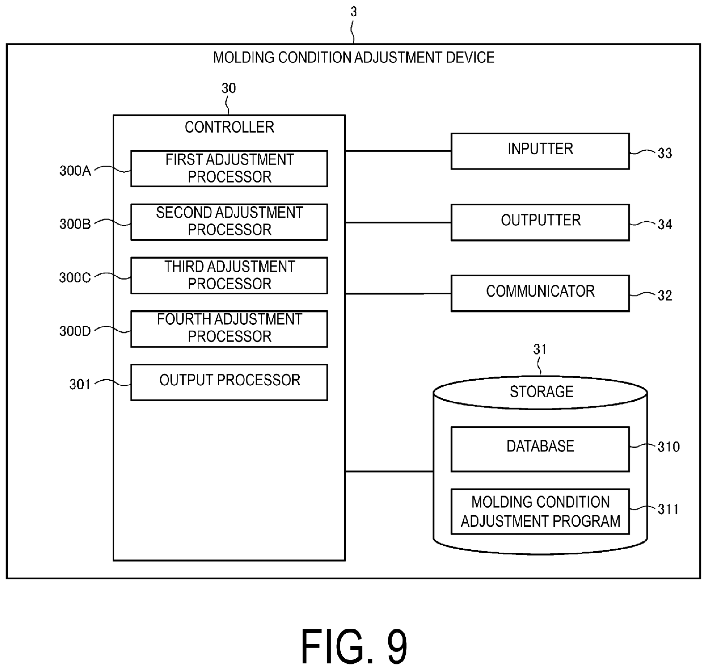

FIG. 9 is a block diagram illustrating an example of the molding condition adjustment device 3. The molding condition adjustment device 3 includes a controller 30 constituted by a processor or the like, a storage 31 constituted by an HDD, an SSD, a memory, or the like, a communicator 32 that is a communication interface with the network 5 and the external device, an inputter 33 constituted by a keyboard, a mouse, or the like, and an outputter 34 constituted by a display or the like. Note that the inputter 33 and the outputter 34 may be omitted.

The storage 31 stores the database 310 and a molding condition adjustment program 311, and also stores an operating system, other programs, data, and the like.

The controller 30 functions as a plurality of adjustment processors 300A to 300D by executing the molding condition adjustment program 311 stored in the storage 31.

The plurality of adjustment processors 300A to 300D adjust the plurality of adjustment items related to the preform 10 and the bottle 11 in accordance with a predetermined adjustment order. Then, the plurality of adjustment processors 300A to 300D each adjust an adjustment item by setting a device setting value related to the adjustment item by at least one setting method among a plurality of setting methods. At this time, the plurality of adjustment processors 300A to 300D refer to the database 310 and register the adjustment results of the device setting values in the database 310.

The adjustment order of the adjustment items is determined in advance for the plurality of adjustment items. For example, the adjustment order for the temperature of the preform 10 is designated as an earlier order than the adjustment order for the other adjustment items. More specifically, the adjustment order for the temperature of the preform 10 is designated as an earlier order than the adjustment order for the mass distribution of the bottle 11, and the adjustment order for the mass distribution of the bottle 11 is designated as an earlier order than the adjustment order for the height of the bottle 11 and the adjustment order for the internal volume of the bottle 11. In the present embodiment, a case where the first adjustment processor 300A adjusts the temperature of the preform 10, the second adjustment processor 300B adjusts the mass distribution of the bottle 11, the third adjustment processor 300C adjusts the height of the bottle 11, and the fourth adjustment processor 300D adjusts the internal volume of the bottle 11 as the adjustment order of the adjustment items will be described. The adjustment order of the adjustment items is not limited to the above example, and can be changed as appropriate.

The following setting methods are used as the setting methods for the device setting values.
(a) Preform overall heating condition: A device setting value related to overall heating of the preform 10, such as a device setting value for increasing or decreasing the heating amount of the plurality of preform heating modules 210 as a whole, is set.
(b) Preform individual heating condition: A device setting value related to individual heating of the preform 10, such as each device setting value for individually increasing or decreasing the heating amount of each of the plurality of preform heating modules 210, is set.
(c) Preform local heating condition: A device setting value related to local heating of the preform 10, such as a device setting value for individually increasing or decreasing the heating amount of the preform local heating module 211, is set.
(d) Pre-blow condition: Device setting values related to the pre-blow, such as device setting values for increasing or decreasing the stretching amount and the stretching speed by the stretching unit 252, and device setting values for increasing or decreasing the pre-blow pressure, the pre-blow time, and the pre-blow flow rate by the blowing unit 253, are set.
(e) Main blow condition: Device setting values related to the main blow, such as device setting values for increasing or decreasing the main blow pressure, the main blow time, and the main blow flow rate by the blowing unit 253, are set.
(f) Bottle cooling condition: A device setting value related to cooling of the bottle 11, such as a device setting value for increasing or decreasing the heating amount of the mold 200 by the mold heating unit 254, is set.

The setting methods for the device setting values are not limited to the above example, and can be changed as appropriate. For example, when (a) preform overall heating condition, (b) preform individual heating condition, and (c) preform local heating condition are defined as a common category of preform heating conditions for setting device setting values related to the heating of the preform 10, each device setting value for increasing or decreasing the air volume or the air pressure of the blower module may be further set in the preform heating conditions. In addition, one of the setting methods described above may be divided into a plurality of setting methods. For example, (d) pre-blow condition may be divided into a first pre-blow condition for setting respective device setting values for the stretching amount and the stretching speed, and a second pre-blow condition for setting respective device setting values of the pre-blow pressure, the pre-blow time, and the pre-blow flow rate. Further, the plurality of setting methods described above may be combined into one setting method. For example, a setting process may be performed by using a setting method obtained by combining (a) preform overall heating condition and (d) pre-blow condition, as one setting method. In one setting method, a plurality of device setting values may be set, or one device setting value may be set. For example, in (e) main blow condition, device setting values for the main blow pressure and the main blow flow rate may be set, only a device setting value for the main blow pressure may be set, or only a device setting value for the main blow flow rate may be set.

Each of the plurality of adjustment processors 300A to 300D may perform a plurality of setting processes of setting a device setting value related to an adjustment item by a plurality of setting methods. In that case, each of the plurality of adjustment processors 300A to 300D sequentially performs the plurality of setting processes in accordance with a predetermined setting order. Then, each of the plurality of adjustment processors 300A to 300D determines whether a target value for the adjustment item is satisfied by a device setting value set by a setting process performed earlier in the setting order. When the target value is satisfied, the adjustment of the adjustment item is ended, and when the target value is not satisfied, the adjustment of the adjustment item is continued by proceeding to a setting process by the setting method of the next setting order. Accordingly, the setting process is performed in a stepwise manner by the plurality of setting methods for each adjustment item, and thus the molding conditions in the blow molding can be appropriately adjusted.

At this time, the setting order by the plurality of setting methods is determined in advance for the plurality of setting methods. As the setting order by the plurality of setting methods, for example, the setting order of a setting method for performing rough adjustment for an adjustment item is designated as an earlier order, and the setting order of a setting method for performing fine adjustment for the adjustment item is designated as a later order. Accordingly, a priority order in performing a setting process by the plurality of setting methods is appropriately set for each adjustment item, and device setting values are easily converged, so that the molding conditions in the blow molding can be appropriately adjusted. The setting method may be different for each adjustment item, and the setting order may also be different for each adjustment item.

An output processor 301 performs an output process of outputting adjustment results adjusted by the adjustment processors 300A to 300D to an external device. As an example of the output process, the output processor 301 transmits adjustment results by the adjustment processors 300A to 300D to the bottle manufacturing device 2, the user terminal device 4, and the like.

FIG. 10 is a hardware configuration diagram illustrating an example of a computer 900 constituting each device. Each of the devices 2 to 4 constituting the bottle manufacturing management system 1 is constituted by a general-purpose or dedicated computer 900.

As illustrated in FIG. 10, the computer 900 includes, as main components thereof, a bus 910, a processor 912, a memory 914, an input device 916, an output device 917, a display device 918, a storage device 920, a communication I/F (interface) unit 922, an external device I/F unit 924, an I/O (input/output) device I/F unit 926, and a media input/output unit 928. Note that the above-described components may be omitted as appropriate depending on the application of the computer 900.

The processor 912 is constituted by one or a plurality of arithmetic processing devices (such as central processing unit (CPU), micro-processing unit (MPU), digital signal processor (DSP), and graphics processing unit (GPU)), and operates as a controller that comprehensively controls the entirety of the computer 900. The memory 914 stores various data and a program 930 and is constituted by a volatile memory (such as DRAM and SRAM) that functions as a main memory, a nonvolatile memory (ROM), a flash memory, and the like, for example.

The input device 916 is constituted by, for example, a keyboard, a mouse, a numeric keypad, an electric pen, or the like, and functions as an inputter. The output device 917 is constituted by, for example, a sound (voice) output device, a vibration device, or the like, and functions as an outputter. The display device 918 is constituted by, for example, a liquid crystal display, an organic EL display, electronic paper, a projector, or the like, and functions as an outputter. The input device 916 and the display device 918 may be integrally formed as a touch panel. The storage device 920 is constituted by, for example, an HDD, an SSD, or the like, and functions as a storage. The storage device 920 stores various data required for executing an operating system and the program 930.

The communication I/F unit 922 is connected to a network 940 (which may be the same as the network 5 in FIG. 1) such as the Internet and an intranet, in a wired or wireless manner, and functions as a communicator that transmits and receives data to and from other computers in accordance with a predetermined communication standard. The external device I/F unit 924 is connected to an external device 950, such as a camera, a printer, a scanner, or a reader/writer, in a wired or wireless manner, and functions as a communicator that transmits and receives data to and from the external device 950 in accordance with a predetermined communication standard. The I/O device I/F unit 926 is connected to an I/O device 960 such as various sensors and actuators, and functions as a communicator that transmits and receives, to and from the I/O device 960, data and various signals such as a detection signal of a sensor and a control signal to an actuator, for example. The media input/output unit 928 is constituted by a drive device such as a digital versatile disc (DVD) drive or a compact disc (CD) drive, a memory card slot, or a USB connector, and reads and writes data from and to a medium (non-transitory storage medium) 970 such as a DVD, a CD, a memory card, or a USB memory.

In the computer 900 with the above-described configuration, the processor 912 loads the program 930 stored in the storage device 920 into the memory 914 and executes the loaded program 930 to control each unit of the computer 900 through the bus 910. Note that the program 930 may be stored in the memory 914 instead of the storage device 920. The program 930 may be stored in the medium 970 in an installable file format or an executable file format, and may be provided to the computer 900 through the media input/output unit 928. The program 930 may be downloaded and provided to the computer 900 via the network 940 through the communication I/F unit 922. In addition, the computer 900 may provide various functions that are implemented by the processor 912 executing the program 930, by using hardware such as a field-programmable gate array (FPGA) or an application specific integrated circuit (ASIC).

The computer 900 is any form of an electronic device, and, for example, constituted by a stationary computer or a portable computer. The computer 900 may be a client-type computer, a server-type computer, or a cloud-type computer, or may be an embedded computer called a control panel, a controller (including a microcomputer, a programmable logic controller, and sequencer), or the like.

### Molding Condition Adjustment Method by Molding Condition Adjustment Device 3

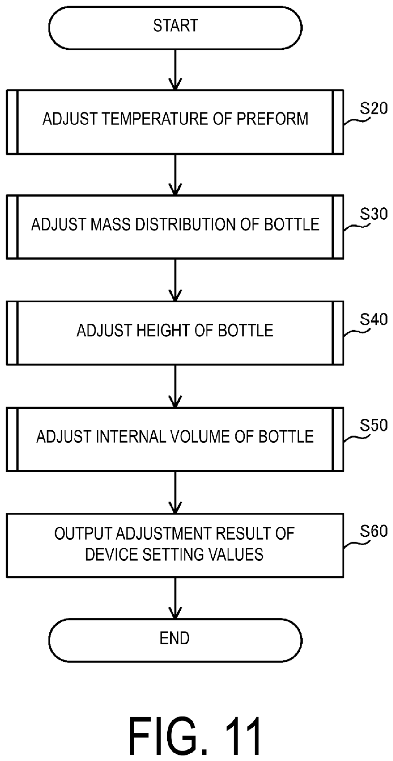

FIG. 11 is a flowchart illustrating an example of a molding condition adjustment method by the molding condition adjustment device 3. Hereinafter, a case where a manufacturing manager performs various input operations on the user terminal device 4 to adjust the molding conditions for the bottle 11 whose specific product number is identified by a bottle management ID will be described.

First, in step S20 (adjustment step) illustrated in FIG. 11, the first adjustment processor 300A adjusts the "temperature of the preform 10" as the first adjustment item.

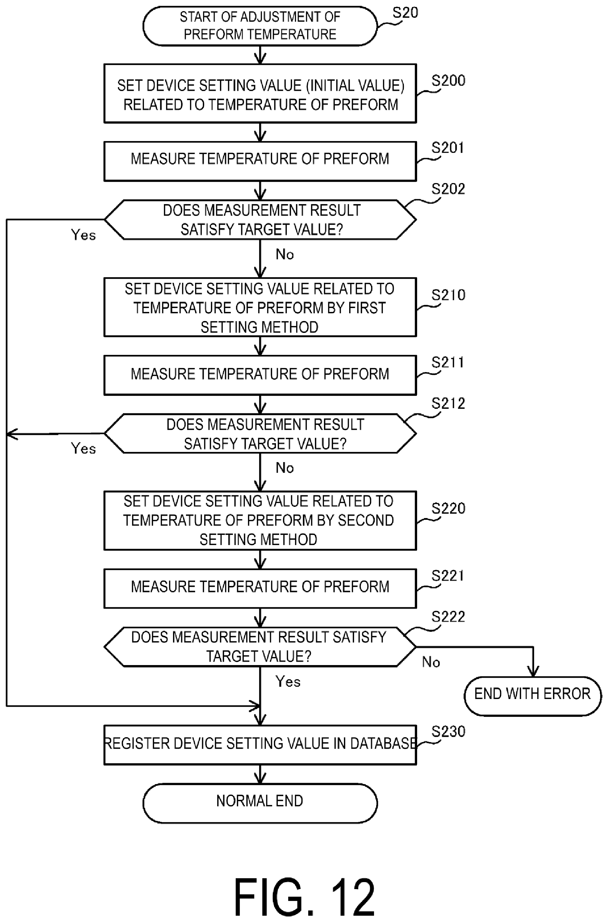

FIG. 12 is a flowchart illustrating details of the adjustment step (step S20) of adjusting the temperature of the preform 10. In the adjustment step of adjusting the temperature of the preform 10, a plurality of setting processes of setting device setting values for the preform heating device 20d by the plurality of setting methods are performed. As the setting methods at that time, one or more setting methods among (a) preform overall heating condition, (b) preform individual heating condition, and (c) preform local heating condition are used. For example, (a) preform overall heating condition and (b) preform individual heating condition are used.

In FIG. 12, a case where any two of the above-described setting methods are used as a first setting method and a second setting method will be described.

In step S200, the first adjustment processor 300A sets an initial value of a device setting value related to the temperature of the preform 10. The initial value is set for, for example, the plurality of preform heating modules 210 provided to the preform heating unit 21. At this time, in a case where a past device setting value when the bottle 11 of the same product number was manufactured in the past is stored in the molding condition information A of the database 310, the past device setting value or a device setting values similar to the past device setting value is set as the initial value. Note that the initial value may be set when the first adjustment processor 300A receives a device setting value input by the manufacturing manager via the display screen of the user terminal device 4.

In step S201, the first adjustment processor 300A measures the temperature of the preform 10 when the preform 10 is heated with the device setting value set for the preform heating unit 21 in step S200, and acquires the measurement result. The temperature of the preform 10 is measured by, for example, the temperature sensor 212 and acquired from the preform heating device 20d. In addition, the temperature of the preform 10 may be measured by an external measuring device, and the first adjustment processor 300A may receive the measurement result of the measuring device input by the manufacturing manager via the display screen of the user terminal device 4, thereby acquiring the measurement result.

In step S202, the first adjustment processor 300A determines whether the measurement result of the temperature of the preform 10 measured in step S201 satisfies a target value of the temperature of the preform 10. The target value of the temperature of the preform 10 is represented by, for example, a temperature distribution indicating temperatures of a plurality of locations of the preform 10. Whether the target value is satisfied is determined, for example, in accordance with whether the measurement result of the temperature of the preform 10 falls within a predetermined range with reference to the target value. The target value is acquired by referring to the adjustment item information B of the database 310. The first adjustment processor 300A may acquire a target value by receiving the target value input by the manufacturing manager via the display screen of the user terminal device 4.

As a result of the determination in step S202, in a case where the measurement result of the temperature of the preform 10 satisfies the target value (step S202: Yes), the processing proceeds to step S230, the device setting value and the measurement result at that time are registered in the database 310, and the adjustment of the temperature of the preform 10 is normally ended. On the other hand, in a case where the target value is not satisfied (step S202: No), the processing proceeds to step S210.

In step S210, the first adjustment processor 300A performs a setting process of setting a device setting value related to the temperature of the preform 10 by the first setting method. As the first setting method, when (a) preform overall heating condition described above is used, the device setting value is an overall heating level, and when the above-described (b) preform individual heating condition described above is used, the device setting value is an individual heating level. The device setting value is set, for example, in accordance with a difference value between the measurement result of the temperature of the preform 10 and the target value. In addition, the first adjustment processor 300A may set a device setting value by receiving the device setting value input by the manufacturing manager via the display screen of the user terminal device 4.

In step S211, the first adjustment processor 300A measures the temperature of the preform 10 when the preform 10 is heated with the device setting value set by the first setting method in step S210, and acquires the measurement result in the same manner as in step S201.

In step S212, the first adjustment processor 300A determines whether the measurement result of the temperature of the preform 10 measured in step S211 satisfies the target value of the temperature of the preform 10 in the same manner as in step S202.

As a result of the determination in step S212, in a case where the measurement result of the temperature of the preform 10 satisfies the target value (step S212: Yes), the processing proceeds to step S230, the device setting value and the measurement result at that time are registered in the database 310, and the adjustment of the temperature of the preform 10 is normally ended. On the other hand, in a case where the target value is not satisfied (step S212: No), the processing proceeds to step S220.

In step S220, the first adjustment processor 300A performs a setting process of setting a device setting value related to the temperature of the preform 10 by the second setting method. As the second setting method, when (a) preform overall heating condition described above is used, the device setting value is an overall heating level, and when the above-described (b) preform individual heating condition described above is used, the device setting value is an individual heating level. The device setting value is set, for example, in accordance with a difference value between the measurement result of the temperature of the preform 10 and the target value. In addition, the first adjustment processor 300A may set a device setting value by receiving the device setting value input by the manufacturing manager via the display screen of the user terminal device 4.

In step S221, the first adjustment processor 300A measures the temperature of the preform 10 when the preform 10 is heated with the device setting value set by the second setting method in step S220, and acquires the measurement result in the same manner as in steps S201 and S211.

In step S222, the first adjustment processor 300A determines whether the measurement result of the temperature of the preform 10 measured in step S221 satisfies the target value of the temperature of the preform 10 in the same manner as in steps S202 and S212.

As a result of the determination in step S222, in a case where the measurement result of the temperature of the preform 10 satisfies the target value (step S222: Yes), the processing proceeds to step S230, the device setting value and the measurement result at that time are registered in the database 310, and the adjustment of the temperature of the preform 10 is normally ended. On the other hand, in a case where the target value is not satisfied (step S222: No), the processing is ended with an error. Note that in the case of end with an error, the flowchart illustrated in FIG. 11 may be ended halfway, or the manufacturing manager may be asked whether to end the flowchart halfway through the display screen of the user terminal device 4.

Next, in step S30 (adjustment step) illustrated in FIG. 11, the second adjustment processor 300B adjusts the "mass distribution of the bottle 11" as the second adjustment item.

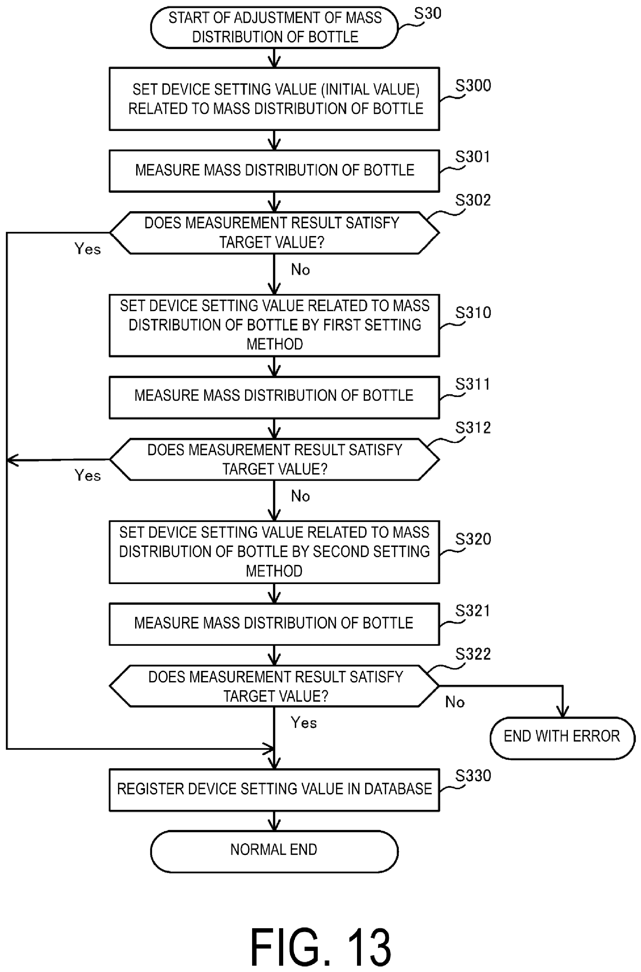

FIG. 13 is a flowchart illustrating details of the adjustment step (step S30) of adjusting the mass distribution of the bottle 11. In the adjustment step of adjusting the mass distribution of the bottle 11, a plurality of setting processes of setting a device setting value for at least one device among the preform heating device 20d and the blow molding device 20f by the plurality of setting methods are performed. As the setting methods at that time, one or more setting methods among (a) preform overall heating condition, (b) preform individual heating condition, (c) preform local heating condition, (d) pre-blow condition, (e) main blow condition (f), and bottle cooling condition are used. For example, (a) preform overall heating condition, (b) preform individual heating condition, and (d) pre-blow condition are used.

In FIG. 13, a case where any two of the above-described setting methods are used as a first setting method and a second setting method will be described. The basic operation in the flowchart illustrated in FIG. 13 is common to that in the flowchart illustrated in FIG. 12, and thus different parts will be mainly described.

In step S300, the second adjustment processor 300B sets initial values of device setting values related to the mass distribution of the bottle 11. The initial values are set for, for example, the preform heating unit 21, the stretching unit 252, the blowing unit 253, and the mold heating unit 254.

In step S301, the second adjustment processor 300B measures the mass distribution of the bottle 11 when the preform 10 is heated with the device setting values set for the preform heating unit 21, the stretching unit 252, the blowing unit 253, and the mold heating unit 254 in step S300, and acquires the measurement result. The measurement result of the mass distribution of the bottle 11 can also be obtained as follows: For example, the mass of each of a plurality of parts (e.g., a neck portion, a shoulder portion, a body portion, and a bottom portion), which are divided parts of the bottle 11, is measured by an external measuring device, and the second adjustment processor 300B may receive the measurement result of the measuring device input by the manufacturing manager via the display screen of the user terminal device 4.

In step S302, the second adjustment processor 300B determines whether the measurement result of the mass distribution of the bottle 11 measured in step S301 satisfies a target value of the mass distribution of the bottle 11.

As a result of the determination in step S302, in a case where the measurement result of the mass distribution of the bottle 11 satisfies the target value (step S302: Yes), the processing proceeds to step S330, the device setting values and the measurement result at that time are registered in the database 310, and the adjustment of the mass distribution of the bottle 11 is normally ended. On the other hand, in a case where the target value is not satisfied (step S302: No), the processing proceeds to step S310.

In step S310, the second adjustment processor 300B performs a setting process of setting device setting values related to the mass distribution of the bottle 11 by the first setting method. In step S311, the second adjustment processor 300B measures the mass distribution of the bottle 11 when the bottle 11 is blow-molded with the device setting values set by the first setting method in step S310, and acquires the measurement result in the same manner as in step S301. In step S312, the second adjustment processor 300B determines whether the measurement result of the mass distribution of the bottle 11 measured in step S311 satisfies the target value of the mass distribution of the bottle 11 in the same manner as in step S302.

As a result of the determination in step S312, in a case where the measurement result of the mass distribution of the bottle 11 satisfies the target value (step S312: Yes), the processing proceeds to step S330, the device setting values and the measurement result at that time are registered in the database 310, and the adjustment of the mass distribution of the bottle 11 is normally ended. On the other hand, in a case where the target value is not satisfied (step S312: No), the processing proceeds to step S320.

In step S320, the second adjustment processor 300B performs a setting process of setting device setting values related to the mass distribution of the bottle 11 by the second setting method. In step S321, the second adjustment processor 300B measures the mass distribution of the bottle 11 when the bottle 11 is blow-molded with the device setting values set by the second setting method in step S320, and acquires the measurement result in the same manner as in steps S301 and S311. In step S322, the second adjustment processor 300B determines whether the measurement result of the mass distribution of the bottle 11 measured in step S321 satisfies the target value of the mass distribution of the bottle 11 in the same manner as in steps S302 and S312.

As a result of the determination in step S322, in a case where the measurement result of the mass distribution of the bottle 11 satisfies the target value (step S322: Yes), the processing proceeds to step S330, the device setting values and the measurement result at that time are registered in the database 310, and the adjustment of the mass distribution of the bottle 11 is normally ended. On the other hand, in a case where the target value is not satisfied (step S322: No), the processing is ended with an error.

Next, in step S40 (adjustment step) illustrated in FIG. 11, the third adjustment processor 300C adjusts the "height of the bottle 11" as the third adjustment item.

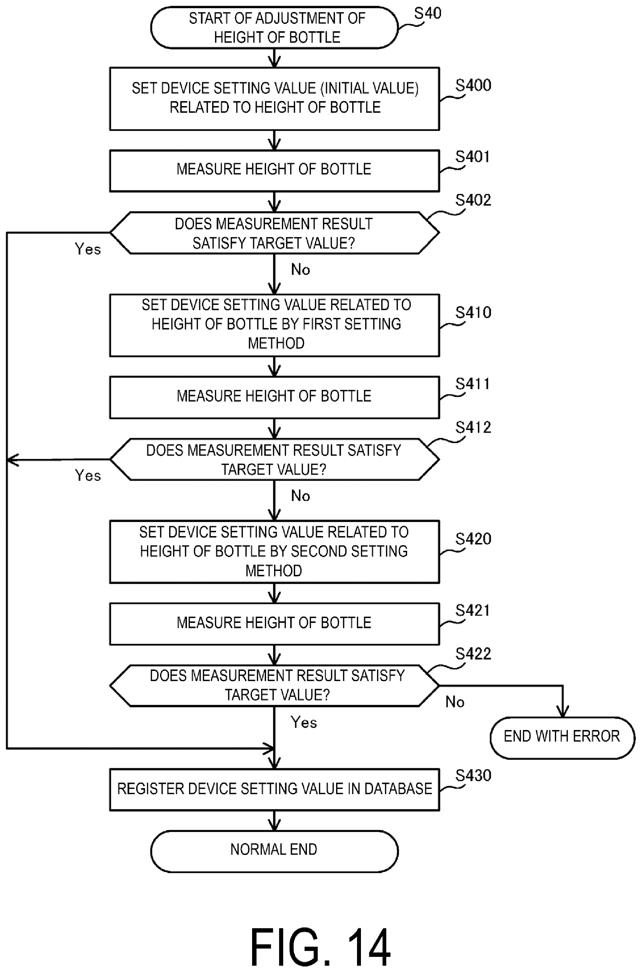

FIG. 14 is a flowchart illustrating details of the adjustment step (step S40) of adjusting the height of the bottle 11. In the adjustment step of adjusting the height of the bottle 11, a plurality of setting processes of setting a device setting value for at least one device among the preform heating device 20d and the blow molding device 20f by the plurality of setting methods are performed. As the setting methods at that time, one or more setting methods among (a) preform overall heating condition, (b) preform individual heating condition, (c) preform local heating condition, (d) pre-blow condition, (e) main blow condition (f), and bottle cooling condition are used. For example, (c) preform local heating condition, (d) pre-blow condition, and (f) bottle cooling condition are used.

In FIG. 14, a case where any two of the above-described setting methods are used as a first setting method and a second setting method will be described. The basic operation in the flowchart illustrated in FIG. 14 is common to that in the flowchart illustrated in FIG. 12, and thus different parts will be mainly described.

In step S400, the third adjustment processor 300C sets initial values of device setting values related to the height of the bottle 11. The initial values are set for, for example, the preform heating unit 21, the stretching unit 252, the blowing unit 253, and the mold heating unit 254.

In step S401, the third adjustment processor 300C measures the height of the bottle 11 when the preform 10 is heated with the device setting values set for the preform heating unit 21, the stretching unit 252, the blowing unit 253, and the mold heating unit 254 in step S400, and acquires the measurement result. The height of the bottle 11 may be measured by an external measuring device, and the third adjustment processor 300C may receive the measurement result of the measuring device input by the manufacturing manager via the display screen of the user terminal device 4, thereby acquiring the measurement result.

In step S402, the third adjustment processor 300C determines whether the measurement result of the height of the bottle 11 measured in step S401 satisfies a target value of the height of the bottle 11.

As a result of the determination in step S402, in a case where the measurement result of the height of the bottle 11 satisfies the target value (step S402: Yes), the processing proceeds to step S430, the device setting values and the measurement result at that time are registered in the database 310, and the adjustment of the height of the bottle 11 is normally ended. On the other hand, in a case where the target value is not satisfied (step S402: No), the processing proceeds to step S410.

In step S410, the third adjustment processor 300C performs a setting process of setting device setting values related to the height of the bottle 11 by the first setting method. In step S411, the third adjustment processor 300C measures the height of the bottle 11 when the bottle 11 is blow-molded with the device setting values set by the first setting method in step S410, and acquires the measurement result in the same manner as in step S401. In step S412, the third adjustment processor 300C determines whether the measurement result of the height of the bottle 11 measured in step S411 satisfies the target value of the height of the bottle 11 in the same manner as in step S402.

As a result of the determination in step S412, in a case where the measurement result of the height of the bottle 11 satisfies the target value (step S412: Yes), the processing proceeds to step S430, the device setting values and the measurement result at that time are registered in the database 310, and the adjustment of the height of the bottle 11 is normally ended. On the other hand, in a case where the target value is not satisfied (step S412: No), the processing proceeds to step S420.

In step S420, the third adjustment processor 300C performs a setting process of setting device setting values related to the height of the bottle 11 by the second setting method. In step S421, the third adjustment processor 300C measures the height of the bottle 11 when the bottle 11 is blow-molded with the device setting values set by the second setting method in step S420, and acquires the measurement result in the same manner as in steps S401 and S411. In step S422, the third adjustment processor 300C determines whether the measurement result of the height of the bottle 11 measured in step S421 satisfies the target value of the height of the bottle 11 in the same manner as in steps S402 and S412.

As a result of the determination in step S422, in a case where the measurement result of the height of the bottle 11 satisfies the target value (step S422: Yes), the processing proceeds to step S430, the device setting values and the measurement result at that time are registered in the database 310, and the adjustment of the height of the bottle 11 is normally ended. On the other hand, in a case where the target value is not satisfied (step S422: No), the processing is ended with an error.

Next, in step S50 (adjustment step) illustrated in FIG. 11, the fourth adjustment processor 300D adjusts the "internal volume of the bottle 11" as the fourth adjustment item.

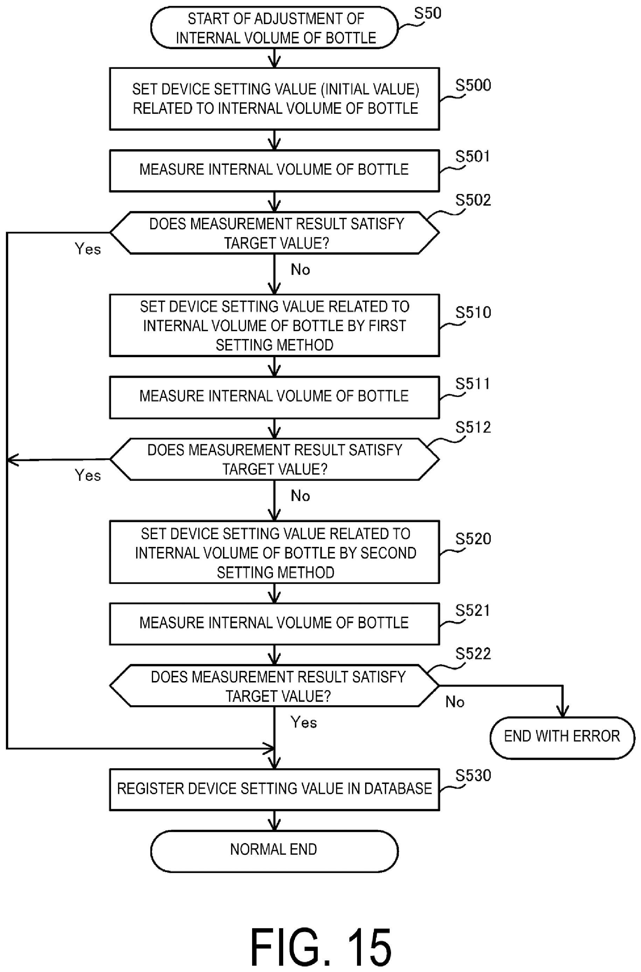

FIG. 15 is a flowchart illustrating details of the adjustment step (step S50) of adjusting the internal volume of the bottle 11. In the adjustment step of adjusting the internal volume of the bottle 11, a plurality of setting processes of setting a device setting value for at least one device among the preform heating device 20d and the blow molding device 20f by the plurality of setting methods are performed. As the setting methods at that time, one or more setting methods among (a) preform overall heating condition, (b) preform individual heating condition, (c) preform local heating condition, (d) pre-blow condition, (e) main blow condition (f), and bottle cooling condition are used. For example, (a) preform overall heating condition, (e) main blow condition, and (f) bottle cooling condition are used.

In FIG. 15, a case where any two of the above-described setting methods are used as a first setting method and a second setting method will be described. The basic operation in the flowchart illustrated in FIG. 15 is common to that in the flowchart illustrated in FIG. 12, and thus different parts will be mainly described.

In step S500, the fourth adjustment processor 300D sets initial values of device setting values related to the internal volume of the bottle 11. The initial values are set for, for example, the preform heating unit 21, the stretching unit 252, the blowing unit 253, and the mold heating unit 254.

In step S501, the fourth adjustment processor 300D measures the internal volume of the bottle 11 when the preform 10 is heated with the device setting values set for the preform heating unit 21, the stretching unit 252, the blowing unit 253, and the mold heating unit 254 in step S500, and acquires the measurement result. The internal volume of the bottle 11 may be measured by an external measuring device, and the fourth adjustment processor 300D may receive the measurement result of the measuring device input by the manufacturing manager via the display screen of the user terminal device 4, thereby acquiring the measurement result.

In step S502, the fourth adjustment processor 300D determines whether the measurement result of the internal volume of the bottle 11 measured in step S501 satisfies a target value of the internal volume of the bottle 11.

As a result of the determination in step S502, in a case where the measurement result of the internal volume of the bottle 11 satisfies the target value (step S502: Yes), the processing proceeds to step S530, the device setting values and the measurement result at that time are registered in the database 310, and the adjustment of the internal volume of the bottle 11 is normally ended. On the other hand, in a case where the target value is not satisfied (step S502: No), the processing proceeds to step S510.

In step S510, the fourth adjustment processor 300D performs a setting process of setting device setting values related to the internal volume of the bottle 11 by the first setting method. In step S511, the fourth adjustment processor 300D measures the internal volume of the bottle 11 when the bottle 11 is blow-molded with the device setting values set by the first setting method in step S510, and acquires the measurement result in the same manner as in step S501. In step S512, the fourth adjustment processor 300D determines whether the measurement result of the internal volume of the bottle 11 measured in step S511 satisfies the target value of the internal volume of the bottle 11 in the same manner as in step S502.

As a result of the determination in step S512, in a case where the measurement result of the internal volume of the bottle 11 satisfies the target value (step S512: Yes), the processing proceeds to step S530, the device setting values and the measurement result at that time are registered in the database 310, and the adjustment of the internal volume of the bottle 11 is normally ended. On the other hand, in a case where the target value is not satisfied (step S512: No), the processing proceeds to step S520.

In step S520, the fourth adjustment processor 300D performs a setting process of setting device setting values related to the internal volume of the bottle 11 by the second setting method. In step S521, the fourth adjustment processor 300D measures the internal volume of the bottle 11 when the bottle 11 is blow-molded with the device setting values set by the second setting method in step S520, and acquires the measurement result in the same manner as in steps S501 and S511. In step S522, the fourth adjustment processor 300D determines whether the measurement result of the internal volume of the bottle 11 measured in step S521 satisfies the target value of the internal volume of the bottle 11 in the same manner as in steps S502 and S512.

As a result of the determination in step S522, in a case where the measurement result of the internal volume of the bottle 11 satisfies the target value (step S522: Yes), the processing proceeds to step S530, the device setting values and the measurement result at that time are registered in the database 310, and the adjustment of the internal volume of the bottle 11 is normally ended. On the other hand, in a case where the target value is not satisfied (step S522: No), the processing is ended with an error.

Next, in step S60 (output step) illustrated in FIG. 11, the output processor 301 performs an output process of outputting an adjustment result of the adjustment in steps S20 to S50. For example, the output processor 301 outputs an adjustment result to the user terminal device 4, and the adjustment result is provided to the manufacturing manager via the display screen of the user terminal device 4. The output processor 301 outputs the adjustment result to the bottle manufacturing device 2, and the adjustment result is stored in the device setting information 2241 of the preform heating device 20d and the device setting information 2641 of the blow molding device 20f. Then, the bottle manufacturing device 2 operates in accordance with the adjustment result, that is, the adjusted molding conditions, thereby manufacturing the bottle 11.

In this way, a series of steps of the molding condition adjustment method illustrated in FIGS. 11 to 15 is completed. Note that the series of steps of the molding condition adjustment method is executed at an arbitrary execution timing before the start of the manufacture of the bottle 11 based on, for example, an instruction of the manufacturing manager, but may be executed when a specific execution condition such as a change in the surrounding environment including temperature or humidity, or a change in the raw material, is satisfied.

As described above, according to the molding condition adjustment device 3 and the molding condition adjustment method by the molding condition adjustment device 3 according to the present embodiment, when each of the plurality of adjustment steps (steps S20 to S50) by the adjustment processors 300A to 300D adjusts the plurality of adjustment items in accordance with the predetermined adjustment order, each adjustment item is adjusted by setting a device setting value related to the adjustment item by at least one setting method among the plurality of setting methods. Therefore, the molding conditions in the blow molding can be appropriately adjusted.

At this time, the plurality of adjustment steps (steps S20 to S50) include at least adjustment steps of adjusting the temperature of the preform 10, the mass distribution of the bottle 11, the height of the bottle 11, and the internal volume of the bottle 11, respectively, in this order. Accordingly, the temperature of the preform 10, which affects all the adjustment items, is first adjusted, and then the mass distribution of the bottle 11, the height of the bottle 11, and the internal volume of the bottle 11 are adjusted in this order, so that the molding conditions in the blow molding can be appropriately adjusted.

In addition, each of the plurality of adjustment steps (steps S20 to S50) performs a plurality of setting processes of setting a device setting value related to an adjustment item by a plurality of setting methods in accordance with a setting order determined in advance for the plurality of setting methods. Accordingly, since the setting process is performed by the plurality of setting methods for each adjustment item, even in a case where it is difficult to adjust the adjustment item only by a specific setting method, it is possible to appropriately adjust the molding conditions in the blow molding.

### Other Embodiments

The present invention is not restricted to the embodiments described above, and can be implemented with various changes without departing from the scope and spirit of the present invention. All of them are included in the technical concept of the present invention.

In the above-described embodiments, the database 310 is described as being stored in the storage 31 of the molding condition adjustment device 3. In contrast, the database 310 may be stored in an external storage device, and in that case, each of the devices 2 to 4 may access the database 310 via the network 5.

In the above-described embodiments, cases where the molding condition adjustment device 3 operates in accordance with each step illustrated in the flowcharts illustrated in FIGS. 11 to 15 have been described.

However, some of the steps may be omitted, or other steps may be added. For example, although two setting methods are performed in each of the adjustment steps (steps S20 to S50) illustrated in FIGS. 12 to 15, three or more setting methods may be performed. In that case, in each of the adjustment steps (steps S20 to S50) illustrated in FIGS. 12 to 15, for example, a setting process by a third setting method may be added after the setting process by the second setting method, and a setting process by a fourth setting method may be further added thereafter, so that the setting processes by three or more setting methods are performed.

In addition, in each of the adjustment steps (steps S20 to S50), a setting process may be performed by a determined setting method as described below.

For example, each of the adjustment steps (steps S30 to S50) whose adjustment order is designated as a second or subsequent order may perform a setting process of setting a device setting value by a setting method different from a setting method that has been performed in another adjustment step, as a setting method whose setting order is designated as a first order. In the examples illustrated in FIGS. 11 to 15, in a case where (a) preform overall heating condition and (b) preform individual heating condition have already been performed as setting methods in step S20, in the first setting method in step S30, a setting process is performed by (d) pre-blow condition, which is a setting method different from the setting methods. Accordingly, in adjusting a new adjustment item, a setting method that has not been performed in another adjustment step is used as a setting method whose setting order is a first order, and thus it is possible to prevent a need for readjustment of an already adjusted adjustment item.

At this time, at least one adjustment step among the adjustment steps (steps S30 to S50) whose adjustment order is designated as a second or subsequent order may perform a setting process of setting a device setting value by a setting method different from a setting method that has been performed last in an adjustment step having an immediately preceding adjustment order, as a setting method whose setting order is designated as a first order. In the examples illustrated in FIGS. 11 to 15, in a case where (b) preform individual heating condition has been performed last in step S20, in the first setting method in step S30, a setting process is performed by (d) pre-blow condition, which is a setting method different from (b). Accordingly, in adjusting a new adjustment item, a setting method that has not been performed last in the immediately preceding adjustment step is used as a setting method having the first setting order, and thus it is possible to prevent a need for readjustment of an already adjusted adjustment item.

In addition, at least one adjustment step among the adjustment steps (steps S30 to S50) whose adjustment order is designated as a second or subsequent order may perform a setting process of setting a device setting value by a setting method common to a setting method that has been performed in another adjustment step, as at least one setting method among the setting methods whose setting order are designated as a second or subsequent order. In the examples illustrated in FIGS. 11 to 15, in a case where (a) preform overall heating condition and (b) preform individual heating condition have already been performed as setting methods in step S20, in the second or subsequent setting methods in step S30, a setting process is performed by (a) preform overall heating condition or (b) preform individual heating condition which is a setting method common to the already performed setting methods. Accordingly, in adjusting a new adjustment item, a setting method already performed in another adjustment step is used as a setting method having the second or subsequent setting order, and thus it is possible to converge the adjustment for the new adjustment item while reducing an influence on the already adjusted adjustment item as much as possible.

Further, each of the plurality of adjustment steps (steps S20 to S50), a setting process of setting a device setting value for the preform heating module 210 may be performed as at least one setting method among the plurality of setting methods. That is, when (a) preform overall heating condition, (b) preform individual heating condition, and (c) preform local heating condition are defined as a common category of preform heating conditions, each of the plurality of adjustment steps (steps S20 to S50) may perform a setting process of setting a device setting value for the preform heating module 210 or the preform local heating module 211 by any setting method included in the preform heating conditions. Accordingly, the heating conditions for the preform 10 having a high degree of influence on the shape and quality of the bottle 11 are set in each of the plurality of adjustment steps, and thus the molding conditions in the blow molding can be appropriately adjusted.

Aspects of the present disclosure will be collectively described in the following supplementary notes.

### Supplementary Note 1

A molding condition adjustment method using a computer to adjust molding conditions under which a molding product manufacturing device operating in accordance with a plurality of device setting values manufactures a molding product having a hollow center by blow-molding a molding object, the molding condition adjustment method including:
a plurality of adjustment steps of adjusting a plurality of adjustment items related to the molding object and the molding product in accordance with an adjustment order determined in advance for the plurality of adjustment items,
in which each of the plurality of adjustment steps
adjusts an adjustment item among the plurality of adjustment items by setting a device setting value among the plurality of device setting values related to the adjustment item in accordance with at least one setting method among a plurality of setting methods.

### Supplementary Note 2

The molding condition adjustment method according to Supplementary Note 1,
in which each of the plurality of adjustment steps
performs a plurality of setting processes of setting the device setting value related to the adjustment item by the plurality of setting methods in accordance with a setting order determined in advance for the plurality of setting methods.

### Supplementary Note 3

The molding condition adjustment method according to Supplementary Note 1 or 2,
in which each of the plurality of adjustment steps
determines whether a target value for the adjustment item is satisfied with the device setting value set by a setting process among the plurality of setting processes performed earlier in the setting order,
when the target value is satisfied, ends adjustment of the adjustment item, and
when the target value is not satisfied, continues the adjustment of the adjustment item by proceeding to a setting process among the plurality of setting processes by a setting method among the plurality of setting processes of a next order in the setting order.

### Supplementary Note 4

The molding condition adjustment method according to any one of Supplementary Notes 1 to 3,
in which each of the plurality of adjustment steps
performs the plurality of setting processes in accordance with the setting order in which, for the plurality of setting methods, a setting order of a setting method among the plurality of setting methods for performing rough adjustment on the adjustment item is designated as an earlier order and a setting order of a setting method among the plurality of setting methods for performing fine adjustment on the adjustment item is designated as a later order.

### Supplementary Note 5

The molding condition adjustment method according to any one of Supplementary Notes 1 to 4,
in which respective adjustment steps among the plurality of adjustment steps having the adjustment order being designated as a second or subsequent order
perform the setting process of setting the device setting value by a setting method among the plurality of setting methods different from a setting method among the plurality of setting methods performed last in an adjustment step among the plurality of adjustment steps having the adjustment order being an immediately preceding order, as a setting method among the plurality of setting methods having the setting order being designated as a first order.

### Supplementary Note 6

The molding condition adjustment method according to any one of Supplementary Notes 1 to 5,
in which at least one adjustment step among the adjustment steps having the adjustment order being designated as a second or subsequent order
performs the setting process of setting the device setting value by a setting method among the plurality of setting methods different from a setting method among the plurality of setting methods that has been performed in a different adjustment step among the plurality of adjustment steps, as the setting method having the setting order being designated as a first order.

### Supplementary Note 7

The molding condition adjustment method according to any one of Supplementary Notes 1 to 6,
in which at least one adjustment step among the adjustment steps having the adjustment order being designated as a second or subsequent order
performs the setting process of setting the device setting value by a setting method among the plurality of setting methods common to a setting method among the plurality of setting methods that has been performed in a different adjustment step among the plurality of adjustment steps, as at least one setting method among the plurality of setting methods having the setting order being designated as a second or subsequent order.

### Supplementary Note 8

The molding condition adjustment method according to any one of Supplementary Notes 1 to 7,
in which the plurality of adjustment items
include a temperature of the molding object, a mass distribution of the molding product, and at least one of a height of the molding product or an internal volume of the molding product, and
the plurality of adjustment steps include at least one adjustment step of
an adjustment step of adjusting the temperature of the molding object,
an adjustment step of adjusting the mass distribution of the molding product,
an adjustment step of adjusting the height of the molding product, or
an adjustment step of adjusting the internal volume of the molding product.

### Supplementary Note 9

The molding condition adjustment method according to any one of Supplementary Notes 1 to 8,
in which the plurality of adjustment items
include a temperature of the molding object, a mass distribution of the molding product, and at least one of a height of the molding product or an internal volume of the molding product, and
the plurality of adjustment steps include at least
an adjustment step of adjusting the temperature of the molding object,
an adjustment step of adjusting the mass distribution of the molding product, and
at least one adjustment step of an adjustment step of adjusting the height of the molding product or an adjustment step of adjusting the internal volume of the molding product.

### Supplementary Note 10

The molding condition adjustment method according to any one of Supplementary Notes 1 to 9,
in which the adjustment order for the temperature of the molding object is designated as an earlier order than the adjustment order for a different adjustment item among the plurality of adjustment items.

### Supplementary Note 11

The molding condition adjustment method according to any one of Supplementary Notes 1 to 10,
in which the adjustment order for the temperature of the molding object is designated as an earlier order than the adjustment order for the mass distribution of the molding product, and
the adjustment order for the mass distribution of the molding product is designated as an earlier order than the adjustment order for the mass distribution of the molding product.

### Supplementary Note 12

The molding condition adjustment method according to any one of Supplementary Notes 1 to 11,
in which the molding product manufacturing device includes at least
a molding object heating device that heats the molding object, and
a blow molding device that manufactures the molding product by blow-molding the molding object heated by the molding object heating device,
the adjustment step of adjusting the temperature of the molding object
performs a plurality of setting processes of setting the device setting value for the molding object heating device by one or more of setting methods among the plurality of setting methods of
a molding object overall heating condition for setting the device setting value related to overall heating of the molding object,
a molding object individual heating condition for setting the device setting value related to individual heating of the molding object, and
a molding object local heating condition for setting the device setting value related to local heating of the molding object, and
the adjustment step of adjusting the mass distribution of the molding product, the adjustment step of adjusting the height of the molding product, and the adjustment step of adjusting the internal volume of the molding product
perform a plurality of setting processes of setting the device setting value for at least one device of the molding object heating device or the blow molding device by one or more of setting methods among the plurality of setting methods of
the molding object overall heating condition,
the molding object individual heating condition,
the molding object local heating condition,
a pre-blow condition for setting the device setting value related to pre-blow,
a main blow condition for setting the device setting value related to main blow, and
a molding product cooling condition for setting the device setting value related to cooling of the molding product.

### Supplementary Note 13

The molding condition adjustment method according to any one of Supplementary Notes 1 to 12,
in which each of the plurality of adjustment steps
performs a plurality of setting processes of setting the device setting value related to the adjustment item by the plurality of setting methods in accordance with a setting order determined in advance for the plurality of setting methods, and
respective adjustment steps among the plurality of adjustment steps having the adjustment order being designated as a second or subsequent order
perform the setting process of setting the device setting value by a setting method among the plurality of setting methods different from a setting method among the plurality of setting methods performed last in an adjustment step among the plurality of adjustment steps having the adjustment order being an immediately preceding order, as a setting method among the plurality of setting methods having the setting order being designated as a first order.

### Supplementary Note 14

The molding condition adjustment method according to Supplementary Note 12 or 13,
in which at least one adjustment step among the adjustment steps having the adjustment order being designated as a second or subsequent order
performs the setting process of setting the device setting value by a setting method among the plurality of setting methods different from a setting method among the plurality of setting methods that has been performed in a different adjustment step among the plurality of adjustment steps, as the setting method having the setting order being designated as a first order.

### Supplementary Note 15

The molding condition adjustment method according to any one of Supplementary Notes 12 to 14,
in which at least one adjustment step among the adjustment steps having the adjustment order being designated as a second or subsequent order
performs the setting process of setting the device setting value by a setting method among the plurality of setting methods common to a setting method among the plurality of setting methods that has been performed in a different adjustment step among the plurality of adjustment steps, as at least one setting method among the plurality of setting methods having the setting order being designated as a second or subsequent order.

### Supplementary Note 16

The molding condition adjustment method according to any one of Supplementary Notes 1 to 12,
in which each of the plurality of adjustment steps
performs a plurality of setting processes of setting the device setting value related to the adjustment item by the plurality of setting methods in accordance with a setting order determined in advance for the plurality of setting methods, and
performs a setting process among the plurality of setting processes of setting the device setting value for the molding object heating device by any one of the molding object overall heating condition, the molding object individual heating condition, and the molding object local heating condition, as at least one setting method among the plurality of setting methods.

### Reference Signs List

1 Bottle manufacturing management system, 2 Bottle manufacturing device, 3 Molding condition adjustment device, 4 User terminal device, 5 Network, 10 Preform (molding object), 11 Bottle (molding product), 20a Injection molding device, 20b Preform ejection device, 20c Preform conveyor, 20d Preform heating device, 20e Preform feeding device, 20f Blow molding device, 20g Molding product ejection device, 20h Molding product conveyor, 21 Preform heating unit, 22 Control unit, 24 Rotary unit, 25 Molding unit, 26 Control unit, 30 Controller, 31 Storage, 32 Communicator, 33 Inputter, 34 Outputter, 200 Mold, 210 Preform heating module, 211 Preform local heating module, 212 Temperature sensor, 240 Rotary support portion, 241 Rotation mechanism portion, 250 Mold support unit, 251 Holding unit, 252 Stretching unit, 253 Blowing unit, 254 Mold heating unit, 300A First adjustment processor, 300B Second adjustment processor, 300C Third adjustment processor, 300D Fourth adjustment processor, 301 Output processor, 310 Database, 311 Molding condition adjustment program, 900 computer

## Claims

1. A molding condition adjustment method using a computer to adjust molding conditions under which a molding product manufacturing device operating in accordance with a plurality of device setting values manufactures a molding product having a hollow center by blow-molding a molding object, the molding condition adjustment method comprising:
a plurality of adjustment steps of adjusting a plurality of adjustment items related to the molding object and the molding product in accordance with an adjustment order determined in advance for the plurality of adjustment items,
wherein each of the plurality of adjustment steps
adjusts an adjustment item among the plurality of adjustment items by setting a device setting value among the plurality of device setting values related to the adjustment item in accordance with at least one setting method among a plurality of setting methods.

2. The molding condition adjustment method according to claim 1,
wherein each of the plurality of adjustment steps
performs a plurality of setting processes of setting the device setting value related to the adjustment item by the plurality of setting methods in accordance with a setting order determined in advance for the plurality of setting methods.

3. The molding condition adjustment method according to claim 2,
wherein each of the plurality of adjustment steps
determines whether a target value for the adjustment item is satisfied with the device setting value set by a setting process among the plurality of setting processes performed earlier in the setting order,
when the target value is satisfied, ends adjustment of the adjustment item, and
when the target value is not satisfied, continues the adjustment of the adjustment item by proceeding to a setting process among the plurality of setting processes by a setting method among the plurality of setting methods of a next order in the setting order.

4. The molding condition adjustment method according to claim 2,
wherein each of the plurality of adjustment steps
performs the plurality of setting processes in accordance with the setting order in which, for the plurality of setting methods, a setting order of a setting method among the plurality of setting methods for performing rough adjustment on the adjustment item is designated as an earlier order and a setting order of a setting method among the plurality of setting methods for performing fine adjustment on the adjustment item is designated as a later order.

5. The molding condition adjustment method according to claim 2,
wherein respective adjustment steps among the plurality of adjustment steps having the adjustment order being designated as a second or subsequent order
perform the setting process of setting the device setting value by a setting method among the plurality of setting methods different from a setting method among the plurality of setting methods performed last in an adjustment step among the plurality of adjustment steps having the adjustment order being an immediately preceding order, as a setting method among the plurality of setting methods having the setting order being designated as a first order.

6. The molding condition adjustment method according to claim 5,
wherein at least one adjustment step among the adjustment steps having the adjustment order being designated as a second or subsequent order
performs the setting process of setting the device setting value by a setting method among the plurality of setting methods different from a setting method among the plurality of setting methods that has been performed in a different adjustment step among the plurality of adjustment steps, as the setting method having the setting order being designated as a first order.

7. The molding condition adjustment method according to claim 6,
wherein at least one adjustment step among the adjustment steps having the adjustment order being designated as a second or subsequent order
performs the setting process of setting the device setting value by a setting method among the plurality of setting methods common to a setting method among the plurality of setting methods that has been performed in a different adjustment step among the plurality of adjustment steps, as at least one setting method among the plurality of setting methods having the setting order being designated as a second or subsequent order.

8. The molding condition adjustment method according to claim 1,
wherein the plurality of adjustment items
include at least one of a temperature of the molding object, a mass distribution of the molding product, a height of the molding product, or an internal volume of the molding product, and
the plurality of adjustment steps include at least one adjustment step of
an adjustment step of adjusting the temperature of the molding object,
an adjustment step of adjusting the mass distribution of the molding product,
an adjustment step of adjusting the height of the molding product, or
an adjustment step of adjusting the internal volume of the molding product.

9. The molding condition adjustment method according to claim 1,
wherein the plurality of adjustment items
include a temperature of the molding object, a mass distribution of the molding product, and at least one of a height of the molding product or an internal volume of the molding product, and
the plurality of adjustment steps include at least
an adjustment step of adjusting the temperature of the molding object,
an adjustment step of adjusting the mass distribution of the molding product, and
at least one adjustment step of an adjustment step of adjusting the height of the molding product or an adjustment step of adjusting the internal volume of the molding product.

10. The molding condition adjustment method according to claim 9,
wherein the adjustment order for the temperature of the molding object is designated as an earlier order than the adjustment order for a different adjustment item among the plurality of adjustment items.

11. The molding condition adjustment method according to claim 9,
wherein the adjustment order for the temperature of the molding object is designated as an earlier order than the adjustment order for the mass distribution of the molding product, and
the adjustment order for the mass distribution of the molding product is designated as an earlier order than the adjustment order for the height of the molding product and the adjustment order for the internal volume of the molding product.

12. The molding condition adjustment method according to any one of claims 8 to 11,
wherein the molding product manufacturing device includes at least
a molding object heating device that heats the molding object, and
a blow molding device that manufactures the molding product by blow-molding the molding object heated by the molding object heating device,
the adjustment step of adjusting the temperature of the molding object
performs a plurality of setting processes of setting the device setting value for the molding object heating device by one or more of setting methods among the plurality of setting methods of
a molding object overall heating condition for setting the device setting value related to overall heating of the molding object,
a molding object individual heating condition for setting the device setting value related to individual heating of the molding object, and
a molding object local heating condition for setting the device setting value related to local heating of the molding object, and
the adjustment step of adjusting the mass distribution of the molding product, the adjustment step of adjusting the height of the molding product, and the adjustment step of adjusting the internal volume of the molding product
perform a plurality of setting processes of setting the device setting value for at least one device of the molding object heating device or the blow molding device by one or more of setting methods among the plurality of setting methods of
the molding object overall heating condition,
the molding object individual heating condition,
the molding object local heating condition,
a pre-blow condition for setting the device setting value related to pre-blow,
a main blow condition for setting the device setting value related to main blow, and
a molding product cooling condition for setting the device setting value related to cooling of the molding product.

13. The molding condition adjustment method according to claim 12,
wherein each of the plurality of adjustment steps
performs a plurality of setting processes of setting the device setting value related to the adjustment item by the plurality of setting methods in accordance with a setting order determined in advance for the plurality of setting methods, and
respective adjustment steps among the plurality of adjustment steps having the adjustment order being designated as a second or subsequent order
perform the setting process of setting the device setting value by a setting method among the plurality of setting methods different from a setting method among the plurality of setting methods performed last in an adjustment step among the plurality of adjustment steps having the adjustment order being an immediately preceding order, as a setting method among the plurality of setting methods having the setting order being designated as a first order.

14. The molding condition adjustment method according to claim 13,
wherein at least one adjustment step among the adjustment steps having the adjustment order being designated as a second or subsequent order
performs the setting process of setting the device setting value by a setting method among the plurality of setting methods different from a setting method among the plurality of setting methods that has been performed in a different adjustment step among the plurality of adjustment steps, as the setting method having the setting order being designated as a first order.

15. The molding condition adjustment method according to claim 14,
wherein at least one adjustment step among the adjustment steps having the adjustment order being designated as a second or subsequent order
performs the setting process of setting the device setting value by a setting method among the plurality of setting methods common to a setting method among the plurality of setting methods that has been performed in a different adjustment step among the plurality of adjustment steps, as at least one setting method among the plurality of setting methods having the setting order being designated as a second or subsequent order.

16. The molding condition adjustment method according to claim 12,
wherein each of the plurality of adjustment steps
performs a plurality of setting processes of setting the device setting value related to the adjustment item by the plurality of setting methods in accordance with a setting order determined in advance for the plurality of setting methods, and
performs a setting process among the plurality of setting processes of setting the device setting value for the molding object heating device by any one of the molding object overall heating condition, the molding object individual heating condition, and the molding object local heating condition, as at least one setting method among the plurality of setting methods.

17. A molding condition adjustment device for adjusting molding conditions under which a molding product manufacturing device operating in accordance with a plurality of device setting values manufactures a molding product having a hollow center by blow-molding a molding object, the molding condition adjustment device comprising:
a plurality of adjustment processors configured to adjust a plurality of adjustment items related to the molding object and the molding product in accordance with an adjustment order determined in advance for the plurality of adjustment items,
wherein each of the plurality of adjustment processors
adjusts an adjustment item among the plurality of adjustment items by setting a device setting value among the plurality of device setting values related to the adjustment item in accordance with at least one setting method among a plurality of setting methods.
